(19) Europäisches Patentamt / European Patent Office / Office européen des brevets

(11) **EP 2 724 575 B1**

(12) **FASCICULE DE BREVET EUROPEEN**

(45) Date de publication et mention
de la délivrance du brevet:
**11.08.2021 Bulletin 2021/32**

(21) Numéro de dépôt: **12734973.6**

(22) Date de dépôt: **20.06.2012**

(51) Int Cl.:
***H04W 52/34*** *(2009.01)*

(86) Numéro de dépôt international:
**PCT/FR2012/051390**

(87) Numéro de publication internationale:
**WO 2012/175869 (27.12.2012 Gazette 2012/52)**

(54) **PROCEDE DE CONTRÔLE DE PUISSANCE DANS LES RESEAUX MOBILES**

VERFAHREN ZUR STEUERUNG DER LEISTUNG IN MOBILEN NETZWERKEN

METHOD FOR CONTROLLING POWER IN MOBILE NETWORKS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.06.2011 FR 1155604**

(43) Date de publication de la demande:
**30.04.2014 Bulletin 2014/18**

(73) Titulaire: **ORANGE
92130 Issy-les-Moulineaux (FR)**

(72) Inventeurs:
• **COMBES, RICHARD
75016 PARIS (FR)**
• **ALTMAN, Zwi
F-92320 Chatillon (FR)**

(56) Documents cités:
**WO-A1-00/38348    US-A1- 2008 026 782**

• **RICHARD COMBES ET AL: "Self-Organizing
Fractional Power Control for Interference
Coordination in OFDMA Networks", ICC 2011 -
2011 IEEE INTERNATIONAL CONFERENCE ON
COMMUNICATIONS - 5-9 JUNE 2011 - KYOTO,
JAPAN, IEEE, PISCATAWAY, NJ, USA, 5 juin 2011
(2011-06-05), pages 1-5, XP031909186, DOI:
10.1109/ICC.2011.5963461 ISBN:
978-1-61284-232-5**
• **None**

**EP 2 724 575 B1**

**Description**

L'invention se rapporte au domaine des réseaux mobiles. L'invention concerne en particulier la détermination de la puissance émise par les stations serveuses dans un réseau mobile.

Il est bien connu, par exemple dans les réseaux mobiles cellulaires, que les interférences entre les multiples signaux émis par les stations de base et reçus par un terminal mobile limitent fortement la QoS (initiales des mots anglais « *Quality of Service* » signifiant « Qualité de Service ») offerte aux utilisateurs du réseau, ainsi que la quantité globale de trafic que le réseau peut gérer. L'effet des interférences intercellulaires est particulièrement perceptible le long des bordures de cellule, puisque pour un utilisateur situé au centre d'une cellule, la force du signal utile dépasse largement celle des signaux interférents ; la QoS dépend donc surtout des utilisateurs situés en bordure de cellule ; c'est pourquoi les ingénieurs chargés de l'optimisation du réseau côté opérationnel consacrent beaucoup d'efforts à l'optimisation du réseau en bordure de cellule.

Il est possible de combattre les interférences intercellulaires en planifiant en conséquence la puissance de chaque station de base dans la bande, ou chaque sous-bande, de fréquences du spectre d'émission : c'est ce que l'on appelle le « contrôle de puissance ».

L'article de R. Combes, Z. Altman, et E. Altman intitulé « Self-organizing fractional power control for interference coordination in OFDMA networks » (IEEE ICC 2011) propose un procédé dynamique de contrôle de puissance dans les réseaux mobiles de type OFDMA (initiales des mots anglais « *Orthogonal Frequency-Division Multiple Access* » signifiant « Accès Multiple par Division en Fréquence Orthogonale »). Dans ce procédé, on considère, au sein d'un réseau mobile cellulaire, un groupe de A stations de base émettant chacune avec une puissance $P_s^{(b)}$, où $s = 1,...,$ A et $b = 1,...,$ B, dans B sous-bandes de fréquences. Chaque station de base met en œuvre, de manière réitérée (par exemple périodique), les étapes suivantes :

a) réception, de la part de terminaux mobiles desservis par ladite station de base $s$, de mesures de paramètres radio effectuées par ces terminaux mobiles,

b) calcul, pour $b = 1,...,$ B et $t = 1,...,$ A, de valeurs $V_{s,t}^{(b)}$ prédéterminées à l'aide desdites mesures,

c) transmission aux autres stations de base desdites valeurs $V_{s,t}^{(b)}$, et réception, de la part des autres stations de base, des valeurs analogues $V_{t,s}^{(b)}$,

d) calcul, à l'aide desdites valeurs $V_{t,s}^{(b)}$, des dérivées $\dfrac{\partial U}{\partial P_s^{(b)}}$, où $U$ est une fonction d'utilité prédéterminée pour ledit réseau, et

e) mise à jour des puissances de transmission $P_s^{(b)}$ de manière à réduire la valeur de ladite fonction d'utilité $U$.

Plus précisément, selon ce procédé :

$$U = \sum_{s=1}^{A} U_s \ ,$$

où $U_S$ est une fonction prédéterminée des débits délivrés par la station de base $s$.

Concernant l'étape a), si lesdits paramètres radio comprennent le gain (également appelée « *Reference Signal Received Power* », ou RSRP, en anglais), les mesures peuvent être par exemple conformes à la norme 3GPP TS 36.214, « Evolved Universal Terrestrial Radio Access (E-UTRA); Physical layer », Section 5.1.1 (« Measurements »). La transmission de ces mesures à la station de base serveuse est, par exemple, conforme à la norme 3GPP TS 36.331 « *Evolved Universal Terrestrial Radio Access (E-UTRA); Radio Resource Control (RRC); Protocol Spécification* », Sections 5.5 (« *Measurements* ») et 6.3.5 (« *Measurement information elements* »).

Concernant l'étape c), les communications entre stations de base voisines appartenant à un réseau OFDMA de type 3GPP LTE (initiales des mots anglais « *Long Term Evolution* » signifiant « Évolution à Long Terme ») peuvent, par exemple, utiliser l'interface « X2 ».

Ce procédé connu présente plusieurs inconvénients :

- il optimise une métrique associée à la QoS instantanée du réseau ; or de telles métriques ne peuvent être reliées de façon directe aux critères de qualité moyens, qui sont les vraies mesures de qualité auxquelles l'opérateur s'intéresse, par exemple le taux de blocage de communications ou le temps moyen de transfert de fichier ;
- l'optimalité (même partielle) de ce procédé n'a pas été prouvée ; il est donc possible qu'il existe certains scénarios dans lesquels ce procédé connu *dégrade* l'état du réseau au lieu de l'améliorer ; et
- la stabilité de ce procédé n'a pas non plus été prouvée ; or la question de la stabilité est essentielle dans la mesure où aucun opérateur ne voudra mettre en œuvre un tel procédé dans son réseau sans des garanties fortes quant à la stabilité et la résistance au bruit.

Ce procédé converge vers une configuration stable uniquement dans l'hypothèse - évidemment irréaliste -- d'un nombre d'utilisateurs constant dans le temps et de durées de communication infinies. Comme il ne converge pas vers une configuration stable dans des conditions réelles d'utilisation, il est impossible, à partir de l'observation, même sur un temps très long, du comportement dynamique d'une mise en œuvre du procédé, d'en déduire une planification de la puissance d'émission des stations de base dans la bande, ou les sous-bandes, de fréquences.

Il est clair que le problème des interférences évoqué ci-dessus affecte pratiquement tous les types de réseaux mobiles, qu'ils soient cellulaires (2G, 3G, et ainsi de suite) ou sans-fil (WiFi, Bluetooth, et ainsi de suite). La présente invention concerne tous ces types de réseaux, dans lesquels des terminaux mobiles échangent des communications radiofréquences avec des équipements (stations de base, points d'accès, stations-relais, et ainsi de suite) que l'on désignera indifféremment sous le nom de « stations serveuses ».

La présente invention concerne donc un procédé de contrôle de puissance dans un réseau mobile selon la revendication 1.

Ce procédé est remarquable en ce que :

- la fonction d'utilité $U = U(\overline{\rho_1},..., \overline{\rho_A})$ est une fonction croissante de la charge $\overline{\rho_s}$, où s = 1,..., A, définie sur une durée prédéterminée $T$, de chaque station serveuse dudit groupe, ladite charge $\rho_s$ dépendant des intensités de trafic arrivant dans la zone géographique $D_s$ desservie par la station serveuse s et des débits délivrés par cette station serveuse, et

- ladite valeur $V_{t,s}^{(b)}$ est représentative de la quantité $\dfrac{\partial \overline{\rho_t}}{\partial P_s^{(b)}}$.

Grâce à ces dispositions, on peut réduire très efficacement les interférences dans un réseau mobile, en ajustant la puissance transmise par chaque station serveuse sur la bande, ou chacune des sous-bandes, de fréquences d'émission. En effet, pour peu que l'on choisisse judicieusement ladite durée $T$, la fonction d'utilité selon l'invention est directement liée à des critères de qualité moyens du réseau (taux de blocage, temps de transfert de fichier, et ainsi de suite) directement exploitables par l'opérateur, et donc à la QoS moyenne du réseau.

On notera que le procédé selon l'invention prend en compte la quantité de trafic arrivant dans la zone géographique desservie par chaque station serveuse. Ses performances sont, de ce fait, meilleures que les procédés connus dans les situations où la quantité de trafic varie sensiblement d'une zone géographique à une autre, situations que l'on rencontre notamment dans les réseaux mobiles hétérogènes, tels que femto/macro.

En outre, il est possible de démontrer mathématiquement que le procédé de contrôle de puissance selon l'invention organise, sur la base d'une mise en œuvre du procédé pendant une période de temps suffisamment longue, une convergence de la configuration de puissances vers un état stable optimal, et ce, quelles que soient les fluctuations du trafic.

Enfin, le procédé de contrôle de puissance selon l'invention présente également les avantages suivants :

- la charge de signalisation est très faible et compatible avec les capacités disponibles sur les liens entre stations serveuses (interface X2 en LTE) ;
- la charge de calcul est faible car le calcul du gradient se fait à l'aide de formules explicites, et aucune simulation n'est nécessaire ; et
- le procédé est distribué : chaque station met à jour sa propre puissance, il n'existe pas d'entité centrale chargée de coordonner les différentes stations.

Selon des caractéristiques particulières, ladite charge est définie par l'expression :

$$\overline{\rho}_s = \int_{D_s} \frac{\lambda_{\vec{r}}}{\gamma_{\vec{r}}} d^2\vec{r} \ ,$$

où

- $\lambda_{\vec{r}}$ est l'intensité surfacique du trafic arrivant au point $\overline{r}$, et
- $\gamma_{\vec{r}}$ est le débit maximum que la station serveuse s est capable de délivrer au point $\overline{r}$.

Grâce à ces dispositions, ladite charge $\overline{\rho}_s$ est telle que chaque quantité $\frac{\partial \overline{\rho}_t}{\partial P_s^{(b)}}$, où $s,t$ = 1,..., A et $b$ = 1,..., B, peut commodément être évaluée à partir de mesures de paramètres radio effectuées dans le réseau par les terminaux mobiles et par les stations serveuses durant ladite durée $T$.

Selon des caractéristiques encore plus particulières, ladite quantité $\frac{\partial \overline{\rho}_t}{\partial P_s^{(b)}}$ est obtenue en faisant la moyenne, sur des itérations réalisées pendant ladite durée $T$, des quantités $\frac{\partial \rho_{t,m}}{\partial P_s^{(b)}}$, où l'indice $m$ compte les itérations, et la charge aléatoire $\rho_{t,m}$ est définie par :

$$\rho_{t,m} = \frac{1}{T_m} \sum_{j=1}^{N_{t,m}} \frac{\sigma_j}{\gamma_j} \ ,$$

où

- l'index $j$, où $j$ =1,...,$N_{t,m}$, compte les communications initiées dans la zone géographique $D_t$ durant une période de durée $T_m < T$, ou bien une sélection prédéterminée de ces communications,
- $\gamma_j$ est le débit de la communication n° $j$, et
- $\sigma_j$ est la taille de fichier pour la communication n° $j$.

Grâce à ces dispositions, on peut commodément estimer (les dérivées de) la charge « physique » $\overline{\rho}_s$ en calculant des échantillons aléatoires au fur et à mesure de périodes successives (jointives ou non, et de durées $T_m$ égales entre elles ou non) prises au sein de la durée $T$.

Corrélativement, l'invention concerne un dispositif de contrôle de puissance dans un réseau mobile selon la revendication 5.

Ce dispositif est remarquable en ce que :

- la fonction d'utilité $U = U(\overline{\rho}_1,...,\overline{\rho}_A)$ est une fonction croissante de la charge $\overline{\rho}_s$, où s = 1,..., A, définie sur une durée prédéterminée $T$, de chaque station serveuse dudit groupe, ladite charge $\overline{\rho}_s$ dépendant des intensités de trafic arrivant dans la zone géographique $D_s$ desservie par la station serveuse s et des débits délivrés par cette station serveuse, et

- ladite valeur $V_{t,s}^{(b)}$ est représentative de la quantité $\dfrac{\partial \overline{\rho}_t}{\partial P_s^{(b)}}$.

Selon des caractéristiques particulières, ladite charge est définie par l'expression :

$$\overline{\rho}_s = \int_{D_s} \frac{\lambda_{\vec{r}}}{\gamma_{\vec{r}}} d^2\vec{r} \;,$$

où

- $\lambda_{\vec{r}}$ est l'intensité surfacique du trafic arrivant au point $\overline{r}$, et
- $\gamma_{\vec{r}}$ est le débit maximum que la station serveuse s est capable de délivrer au point $\overline{r}$.

Selon des caractéristiques encore plus particulières, ce dispositif possède en outre des moyens pour obtenir ladite quantité $\dfrac{\partial \overline{\rho}_t}{\partial P_s^{(b)}}$ en faisant la moyenne, sur des itérations réalisées pendant ladite durée $T$, des quantités $\dfrac{\partial \rho_{t,m}}{\partial P_s^{(b)}}$, où l'indice $m$ compte les itérations, et la charge aléatoire $\rho_{t,m}$ est définie par :

$$\rho_{t,m} = \frac{1}{T_m} \sum_{j=1}^{N_{t,m}} \frac{\sigma_j}{\gamma_j} \;,$$

où

- l'index $j$, où $j = 1,...,N_{t,m}$, compte les communications initiées dans la zone géographique $D_t$ durant une période de durée $T_m < T$, ou bien une sélection prédéterminée de ces communications,
- $\gamma_j$ est le débit de la communication n° $j$, et
- $\sigma_j$ est la taille de fichier pour la communication n° $j$.

Selon des caractéristiques particulières, on pourra réaliser l'un quelconque des dispositifs de contrôle de puissance succinctement exposés ci-dessus dans le contexte d'un circuit électronique. Ce circuit électronique pourra, par exemple, être constitué par une puce à logique câblée.

Les avantages offerts par ces dispositifs sont essentiellement les mêmes que ceux offerts par les procédés corrélatifs succinctement exposés ci-dessus.

L'invention vise également une station serveuse d'un réseau mobile, comprenant un dispositif tel que décrit succinctement ci-dessus.

En variante, on pourra prévoir que, pour certaines stations serveuses au moins, le dispositif associé sera hébergé hors de la station serveuse, par exemple dans un centre de gestion opéré par l'opérateur du réseau mobile.

L'invention vise également, enfin, un programme d'ordinateur selon la revendication 12 téléchargeable depuis un réseau de communication et/ou stocké sur un support lisible par ordinateur et/ou exécutable par un microprocesseur, et un moyen de stockage de données selon la revendication 11.

Les avantages offerts par ces dispositifs et ce programme d'ordinateur sont essentiellement les mêmes que ceux offerts par lesdits procédés.

D'autres aspects et avantages de l'invention apparaîtront à la lecture de la description détaillée ci-dessous de modes de réalisation particuliers, donnés à titre d'exemples non limitatifs. La description se réfère aux dessins qui l'accompagnent, dans lesquels :

- la figure 1 est un organigramme des étapes principales d'un mode de réalisation du procédé selon l'invention,
- la figure 2 est un graphique du taux de blocage moyen dans le réseau, d'une part sans contrôle de puissance et d'autre part avec le contrôle de puissance selon l'invention,
- la figure 3 est un graphique du débit total moyen du réseau, d'une part sans contrôle de puissance et d'autre part avec le contrôle de puissance selon l'invention, et
- la figure 4 est un graphique du temps de transfert de fichier moyen dans le réseau, d'une part sans contrôle de puissance et d'autre part avec le contrôle de puissance selon l'invention.

Considérons, dans un réseau mobile, un groupe de A stations serveuses émettant chacune avec une puissance $P_s^{(b)}$, où $s = 1,..., A$ et $b = 1,..., B$, dans $B$ sous-bandes de fréquences. De préférence, on prendra en compte la totalité des stations serveuses du réseau lors de la mise en œuvre du procédé selon l'invention.

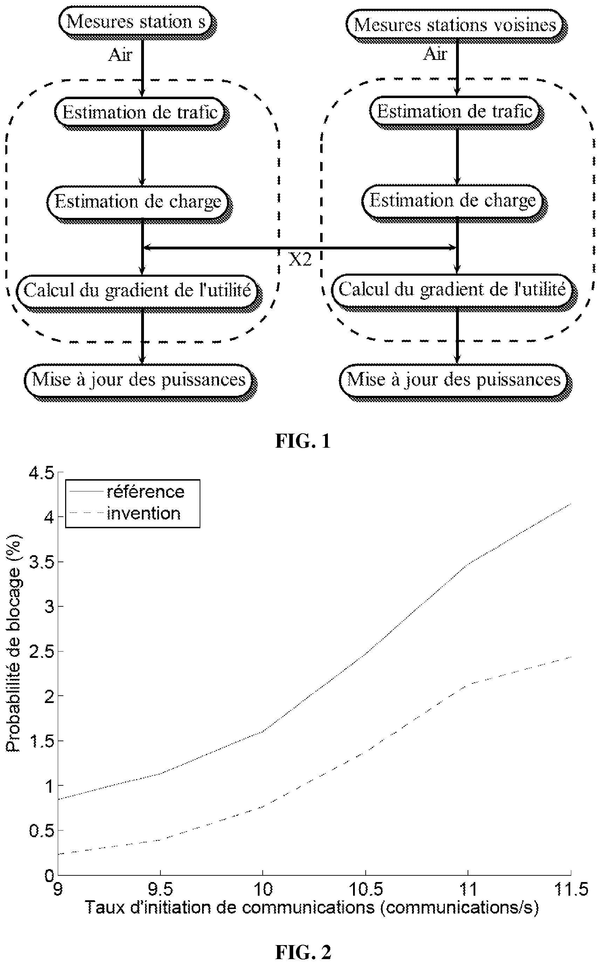

La **figure 1** illustre schématiquement les étapes principales d'un mode de réalisation du procédé de contrôle de puissance selon l'invention. Dans ce mode de réalisation, une station serveuse donnée ne transmet les données $V_{s,t}^{(b)}$ mentionnées ci-dessus qu'aux stations serveuses « voisines » (au sens défini ci-dessous), et ce, afin de limiter à ce qui est vraiment utile le nombre de messages associés à la mise en œuvre de l'invention.

Sur la figure 1 :

- les étiquettes « Mesures station s » et « Mesures stations voisines » représentent, dans ce mode de réalisation, l'étape a) (voir ci-dessus) du procédé ;
- les étiquettes « Estimation de trafic » représentent, conformément à l'invention, la mesure par chaque station serveuse du trafic arrivant à cette station ;
- les étiquettes « Estimation de charge » représentent l'étape b) (voir ci-dessus) du procédé ;
- la double flèche étiquetée « X2 » représente l'étape c) (voir ci-dessus) du procédé ;
- les étiquettes « Calcul du gradient de l'utilité » représentent l'étape d) (voir ci-dessus) du procédé ; et
- les étiquettes « Mise à jour des puissances » représentent l'étape e) (voir ci-dessus) du procédé.

Soit $h_{s \to \bar{r}}$ le gain moyen du canal entre une station serveuse s et un point $\bar{r}$ du réseau. Le Rapport Signal sur Interférences plus Bruit (en anglais, « *Signal over Interference plus Noise Ratio* », ou SINR) en un point $\bar{r}$ desservi par une station s vaut :

$$R_{\bar{r}}^{(b)} = \frac{h_{s \to \bar{r}} P_s^{(b)}}{\theta^2 + \sum_{s' \neq s} h_{s' \to \bar{r}} P_{s'}^{(b)}} \, , \qquad (1)$$

où $\theta^2$ est le bruit thermique. On notera que les terminaux mobiles actuels sont capables de mesurer, pour chaque signal détecté :

- le gain,
- le numérateur du SINR, et
- le dénominateur du SINR.

On désigne par $D_s$ la zone géographique desservie par la station serveuse *s*. Autrement dit :

$$D_s = \left\{ \bar{r} \mid h_{s \to \bar{r}} \geq h_{s' \to \bar{r}} \forall s' \right\}.$$

Par définition, une station serveuse s considère qu'une autre station serveuse *s'* est sa « voisine » s'il existe au moins un point $\bar{r}$ de $D_s$ tel que le gain $h_{s' \to \bar{r}}$ soit supérieur à un seuil prédéterminé.

Soit à présent $\bar{\rho}_s$ la charge de la station serveuse *s*, définie sur une durée $T$ (par exemple, 1 heure) prédéterminée. De préférence, cette durée est choisie de manière à être caractéristique de l'évolution des valeurs moyennes des paramètres radio du réseau considéré.

Conformément à l'invention, premièrement, chaque charge $\overline{\rho_s}$ dépend :

- des intensités de trafic arrivant dans la zone géographique $D_s$ desservie par la station serveuse $s$, et
- des débits délivrés par cette station serveuse.

« L'intensité de trafic » est également connue sous le nom de « taux d'arrivée en bits » (« *bit arrival rate* » en anglais). On notera que ledit trafic se rapporte à des communications initiées durant la durée $T$.

Conformément à l'invention, deuxièmement, on définit une fonction d'utilité $U = U(\overline{\rho_1},..., \overline{\rho_A})$ comme étant une fonction croissante de chaque charge $\overline{\rho_s}$ ($s = 1,..., A$) du groupe, par exemple :

$$U = \sum_{s=1}^{A} \alpha_s \overline{\rho_s} \ , \tag{2}$$

où les coefficients $\alpha_s$ sont des nombres réels strictement positifs prédéterminés.

On cherche alors un ensemble de valeurs de puissance d'émission $P_s^{(b)}$ tel que la fonction d'utilité $U$ soit minimisée. Pour ce faire, on peut par exemple utiliser la méthode classique dite de la « descente de gradient », qui consiste ici à se rapprocher progressivement d'un minimum de $U$ par mises à jour successives de l'ensemble des puissances d'émission, conformément à la formule :

$$P_s^{(b)} \leftarrow P_s^{(b)} - \varepsilon_m \frac{\partial U}{\partial P_s^{(b)}} \ \ \text{pour } b = 1,...,B \text{ et } s = 1,...,A \ , \tag{3}$$

où $m$ est un entier numérotant les mises à jour successives, et $\varepsilon_m$ est un « petit » nombre réel positif, de préférence décroissant d'une mise à jour à la suivante. Ces mises à jour interviennent à des instants prédéterminés, par exemple à intervalles réguliers.

Ces mises à jour requièrent par conséquent le calcul des dérivées partielles

$$\frac{\partial U}{\partial P_s^{(b)}} = \sum_{t=1}^{A} \frac{\partial U}{\partial \overline{\rho_t}} \frac{\partial \overline{\rho_t}}{\partial P_s^{(b)}} \ , \tag{4}$$

où les dérivées partielles $\dfrac{\partial U}{\partial \overline{\rho_t}}$ sont connues ; dans l'exemple de l'équation (2) ci-dessus :

$$\frac{\partial U}{\partial \overline{\rho_t}} = \alpha_t \ .$$

Il faut donc pouvoir évaluer chaque dérivée partielle $\dfrac{\partial \overline{\rho_t}}{\partial P_s^{(b)}} \ ,$ où $s,t = 1,...,A$, et $b = 1,...,B$.

Dans le présent mode de réalisation, chaque station serveuse s reçoit, de la part de chaque station serveuse voisine t, une valeur représentative de la quantité $\dfrac{\partial \overline{\rho}_t}{\partial P_s^{(b)}}$ (ainsi que, si l'on choisit une fonction d'utilité non-linéaire, des valeurs de charges elles-mêmes), ce qui lui permet de mettre à jour sa puissance d'émission $P_s^{(b)}$.

Comme indiqué ci-dessus, on peut démontrer que, avantageusement, l'itération de ces mises à jour conduit de manière certaine à une convergence de la fonction d'utilité $U$ vers un minimum local, de sorte que l'ensemble des stations serveuses concernées atteignent une configuration d'équilibre stable ; cette configuration d'équilibre évolue parallèlement (le cas échéant) sur une durée encore plus longue que la durée $T$ en fonction des variations du trafic.

Dans le présent mode de réalisation de l'invention, on choisit pour la charge l'expression suivante :

$$\overline{\rho}_s = \int_{D_s} \frac{\lambda_{\vec{r}}}{\gamma_{\vec{r}}} d^2\vec{r} \ , \tag{5}$$

où

- $\lambda_{\vec{r}}$ est l'intensité surfacique (mesurée par exemple en bit/s/m$^2$) du trafic arrivant au point $\overline{r}$, et
- $\gamma_{\vec{r}}$ est le débit maximum (mesuré par exemple en bit/s) que la station serveuse s est capable de délivrer au point $\overline{r}$ (i.e. le débit atteignable si la station n'envoie des données que vers ce point $\overline{r}$). Classiquement :

$$\gamma_{\vec{r}} = \sum_{1 \leq b \leq B} f(R_{\vec{r}}^{(b)}) \ , \tag{6}$$

où $f$ est une fonction connue de l'Homme du Métier. On rappelle que cette fonction $f$ modélise l'impact des fluctuations du gain sur le débit (phénomène connu sous le nom de « *fading* » en anglais) pour le système radio concerné, et notamment pour la technologie radio (OFDMA, CDMA, ou autre) mise en œuvre.

On notera que l'expression donnée par l'équation (5) représente bien la charge de la station serveuse s ; en effet, la satisfaction des besoins en matière d'échanges de données des terminaux desservis par cette station serveuse correspond simplement à la condition :

$$\overline{\rho}_s < 1 \ .$$

L'expression de la charge $\overline{\rho}_t$ donnée par l'équation (5) est avantageusement fonction de quantités mesurables par les terminaux mobiles et par les stations serveuses. Il en sera donc de même pour les dérivées de cette charge par rapport aux puissances $P_s^{(b)}$, ces dérivées étant, comme expliqué ci-dessus, requises pour calculer le gradient de l'utilité.

Un moyen pratique pour estimer la charge $\overline{\rho}_s$ consiste à calculer des échantillons au fur et à mesure de périodes successives de durée $T_m$ (par exemple, 1 s), où $m$ est l'index d'itération mentionné ci-dessus et $T_m < T$. Ces échantillons, que nous appellerons «charges aléatoires » $\rho_{s,m}$, sont choisis de manière à ce que leur moyenne sur $m$ soit égale à la charge $\overline{\rho}_s$.

Dans le présent mode de réalisation, on définit ladite charge aléatoire selon l'expression :

$$\rho_{s,m} = \frac{1}{T_m} \sum_{i=1}^{N_{s,m}} \frac{\sigma_i}{\gamma_i} \ , \tag{7}$$

où

- l'index $i = 1,...,N_{s,m}$ compte les communications initiées durant la période $T_m$ dans la zone géographique $D_s$ (ou bien une sélection prédéterminée de ces communications), chaque communication n° i étant associée à la réception de données par un terminal mobile situé au point $\overline{r}_i$,

- $\gamma_i$ est le débit de la communication n° i, et

- $\sigma_i$ est la taille de fichier de la communication n° i, cette taille étant mesurée par la station serveuse s .

On peut en effet démontrer que la moyenne sur m des $\rho_{s,m}$ est égale à $\overline{\rho_s}$.

Il en résulte que, pour $s, t = 1,...,A$, et $b = 1,..., B$ :

$$\frac{\partial \rho_{t,m}}{\partial P_s^{(b)}} = -\frac{1}{T_m} \sum_{j=1}^{N_{t,m}} \frac{\sigma_j}{\gamma_j^2} \frac{\partial \gamma_j}{\partial P_s^{(b)}} \quad , \tag{8}$$

où l'index $j$ numérote les communications initiées durant $T_m$ dans la zone géographique $D_t$.

Par référence à l'équation (6) ci-dessus, on obtient :

$$\frac{\partial \gamma_j}{\partial P_s^{(b)}} = f'\left(R_j^{(b)}\right) \frac{\partial R_j^{(b)}}{\partial P_s^{(b)}} \quad , \tag{9}$$

où $R_j^{(b)}$ désigne le SINR de la communication n° j à laquelle participe un terminal mobile situé au point $\overline{r}_j$ de la zone géographique $D_t$. Compte tenu de l'équation (1), on obtient finalement :

$$\frac{\partial R_j^{(b)}}{\partial P_s^{(b)}} = \frac{h_{t \to \vec{r}_j}}{\theta^2 + \sum_{s' \neq t} h_{s' \to \vec{r}_j} P_{s'}^{(b)}} \quad \text{pour } t = s , \tag{10a}$$

et

$$\frac{\partial R_j^{(b)}}{\partial P_s^{(b)}} = -\frac{h_{s \to \vec{r}_j} h_{t \to \vec{r}_j} P_t^{(b)}}{\left[\theta^2 + \sum_{s' \neq t} h_{s' \to \vec{r}_j} P_{s'}^{(b)}\right]^2} \quad \text{pour } t \neq s . \tag{10b}$$

Il est donc possible pour chaque station $t$ de calculer $\dfrac{\partial R_j^{(b)}}{\partial P_s^{(b)}}$ à partir de mesures (gains, numérateurs et dénominateurs de SINR) remontées par les terminaux mobiles qu'elle dessert. On notera à cet égard qu'une station serveuse donnée n'a nul besoin, pour mettre à jour sa propre puissance d'émission, de connaître les puissances d'émission des autres stations.

On dispose ainsi de tous les ingrédients nécessaires pour pouvoir effectuer la mise à jour n°$m$ des valeurs de puissance d'émission $P_s^{(b)}$.

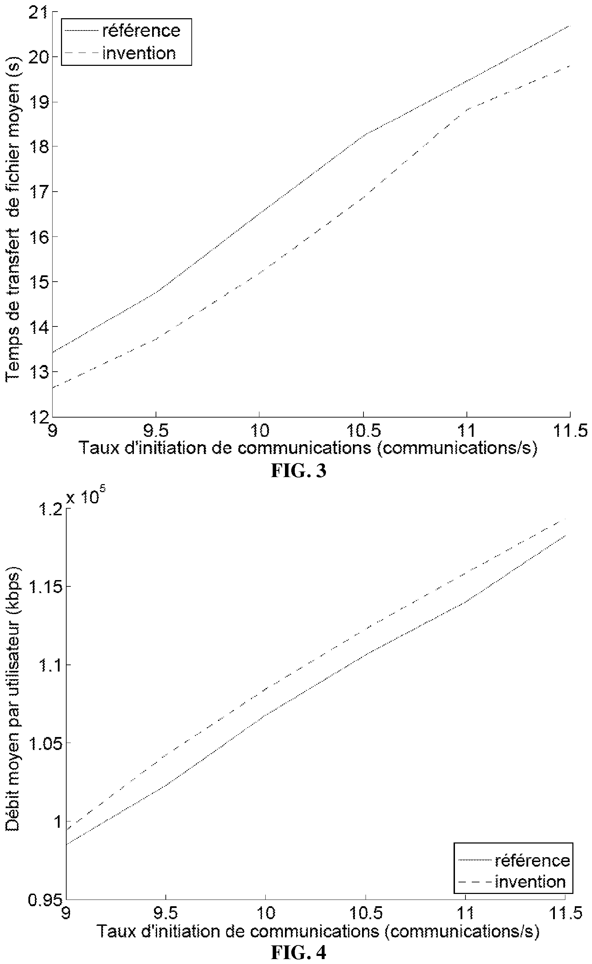

Les figures 2, 3 et 4 illustrent, sur la base d'une simulation d'un réseau utilisant la technologie OFDMA, les bénéfices de l'invention. Sur ces figures, on compare un réseau mettant en œuvre l'invention avec un réseau, dit « de référence », sans contrôle de puissances, c'est-à-dire un réseau dans lequel chaque station émet à sa puissance nominale sans tenir compte des autres stations, et donc, notamment, sans tenir compte des interférences intercellulaires. Plus précisément, la **figure 2** est un graphique du taux de blocage moyen (« *mean blocking rate* » en anglais) dans le réseau en fonction du taux d'arrivée moyen, la **figure 3** est un graphique du débit total moyen (« *mean throughput* » en anglais) du réseau en fonction du taux d'arrivée moyen, et la **figure 4** est un graphique du temps de transfert de fichier moyen (« *mean file transfer time* » en anglais) dans le réseau en fonction du taux d'arrivée moyen ; on appelle « taux d'arrivée moyen » la moyenne, sur la surface du réseau, de l'intensité surfacique de trafic $\lambda_T$ considérée ci-dessus.

L'invention trouve application, en particulier, aux réseaux cellulaires de type OFDMA, tels que les réseaux LTE et WiMax. L'invention est également applicable aux réseaux cellulaires de type CDMA/WCDMA tels que HSPA, dans lesquels il n'existe généralement qu'une seule bande de fréquences, soit $B = 1$. Quelle que soit l'application, comme expliqué ci-dessus, l'Homme du Métier choisira, de manière connue, la fonction $f$ appropriée pour modéliser les fluctuations du canal.

L'invention est, plus généralement, applicable aux algorithmes d'ajustement de n'importe quel paramètre d'une station serveuse en fonction de mesures venant des mobiles et des stations serveuses. En effet, le procédé selon l'invention permet de contrôler maints comportements du réseau en termes de critères de qualité moyens. On pourra ainsi, par exemple, contrôler :

- la puissance des canaux pilotes de chaque station pour réaliser des optimisations de taille de cellule ;
- les marges de « *handover* » (transfert automatique intercellulaire) pour optimiser la mobilité intercellulaire ; et
- différents problèmes d'allocation de ressources dans les réseaux hétérogènes, de type macro/femto par exemple.

L'invention peut être mise en œuvre au sein des nœuds, par exemple des stations serveuses, de réseaux mobiles, au moyen de composants logiciels et/ou matériels. Les composants logiciels pourront être intégrés à un programme d'ordinateur classique de gestion de nœud de réseau.

C'est pourquoi, comme indiqué ci-dessus, la présente invention concerne également un système informatique mettant en œuvre le procédé de contrôle de puissance décrit ci-dessus. Ce système informatique comporte de manière classique une unité centrale de traitement commandant par des signaux une mémoire, ainsi qu'une unité d'entrée et une unité de sortie.

De plus, ce système informatique peut être utilisé pour exécuter un programme d'ordinateur comportant des instructions pour la mise en œuvre du procédé de contrôle de puissance selon l'invention.

En effet, l'invention vise aussi un programme d'ordinateur téléchargeable depuis un réseau de communication comprenant des instructions pour l'exécution des étapes d'un procédé de contrôle de puissance selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter en tant que code source, code objet, ou code intermédiaire entre code source et code objet, sous une forme partiellement compilée ou sous toute autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB (« *USB flash drive* » en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme d'ordinateur est incorporé, le circuit étant adapté pour exécuter ou pour être utilisé dans l'exécution du procédé selon l'invention.

**Revendications**

1. Procédé de contrôle de puissance dans un réseau mobile, ledit procédé comprenant, pour chaque station serveuse $s$, où $s = 1,..., A$ , appartenant à un groupe de A stations serveuses, où $A \geq 2$, émettant chacune avec une puissance

$P_s^{(b)}$, où $b = 1,..., B$, dans $B$ sous-bandes de fréquences, avec $B \geq 1$, les étapes suivantes :

a) réception, de la part de terminaux mobiles desservis par ladite station serveuse $s$, de mesures de paramètres radio effectuées par ces terminaux mobiles, ces mesures comprenant, pour chacun de ces terminaux mobiles :

 • le gain moyen entre la station serveuse s et ce terminal mobile,
 • le gain moyen entre une autre station serveuse t et ce terminal mobile,
 • la puissance reçue par ce terminal mobile de la part de la station serveuse s dans une sous-bande de fréquences $b$, et
 • la puissance totale des interférences et du bruit au niveau de ce terminal mobile,

b) calcul à l'aide desdites mesures, qui ont été remontées par lesdits terminaux mobiles, ainsi que de la fonction de fading modélisant l'impact des fluctuations du gain sur le débit pour le système radio concerné, d'au moins une valeur $V_{s,t}^{(b)}$ prédéterminée, où $b \in [1,...,B]$ et $t \in [1,..., A]$, représentative de la quantité $\dfrac{\partial \overline{\rho}_s}{\partial P_t^{(b)}}$, où $\overline{\rho}_s$ est la charge de la station serveuse $s$ définie sur une durée prédéterminée $T$, ladite charge $\overline{\rho}_s$ dépendant des intensités de trafic arrivant dans la zone géographique $D_s$ desservie par la station serveuse s et des débits délivrés par cette station serveuse,

c) transmission à au moins une autre station serveuse t, ou un dispositif associé à cette station serveuse t, de la valeur respective $V_{s,t}^{(b)}$, et réception, de la part au moins de ladite station serveuse $t$ ou dudit dispositif associé, de la valeur analogue $V_{t,s}^{(b)}$,

d) calcul, à l'aide au moins de ladite valeur $V_{t,s}^{(b)}$, des dérivées $\dfrac{\partial U}{\partial P_s^{(b)}}$, où $U$ est une fonction d'utilité prédéterminée pour ledit réseau, ladite fonction d'utilité $U = U(\overline{\rho}_1,.... \overline{\rho}_A)$ étant une fonction croissante des charges $\overline{\rho}_t$ des stations serveuses dudit groupe et dont les dérivées partielles $\dfrac{\partial U}{\partial \overline{\rho}_t}$ sont connues de chacune de ces stations serveuses, et

e) mise à jour des puissances de transmission $P_s^{(b)}$ de manière à réduire la valeur de ladite fonction d'utilité $U$.

**2.** Procédé de contrôle de puissance selon la revendication 1, **caractérisé en ce que** ladite charge est définie par l'expression :

$$\overline{\rho}_s = \int_{D_s} \frac{\lambda_{\overline{r}}}{\gamma_{\overline{r}}} d^2\vec{r},$$

où

 • $\lambda_{\overline{r}}$ est l'intensité surfacique du trafic arrivant au point $\overline{r}$, et
 • $\gamma_{\overline{r}}$ est le débit maximum que la station serveuse s est capable de délivrer au point $\overline{r}$.

**3.** Procédé de contrôle de puissance selon la revendication 2, **caractérisé en ce que** ladite quantité $\dfrac{\partial \overline{\rho}_t}{\partial P_s^{(b)}}$ est obtenue en faisant la moyenne, sur des itérations réalisées pendant ladite durée *T*, des quantités $\dfrac{\partial \rho_{t,m}}{\partial P_s^{(b)}}$, où l'indice *m* compte les itérations, et la charge aléatoire $\rho_{t,m}$ est définie par :

$$\rho_{t,m} = \frac{1}{T_m} \sum_{j=1}^{N_{t,m}} \frac{\sigma_j}{\gamma_j} \ ,$$

où

- l'index *j*, où *j* = 1,..., $N_{t,m}$, compte les communications initiées dans la zone géographique $D_t$ durant une période de durée $T_m < T$, ou bien une sélection prédéterminée de ces communications,
- $\gamma_j$ est le débit de la communication n° *j,* et
- $\sigma_j$ est la taille de fichier pour la communication n° *j.*

**4.** Procédé de contrôle de puissance selon l'une quelconque des revendications 1 à 3, **caractérisé en ce que**, lors de ladite étape c), chaque station serveuse s ne communique qu'avec les stations serveuses t voisines, une station serveuse t étant considérée comme voisine de la station serveuse s s'il existe, dans la zone géographique $D_s$, au moins un point $\pi$ tel que le gain $h_{\overline{tr}}$ entre la station serveuse t et ce point $\pi$ soit supérieur à un seuil prédéterminé.

**5.** Dispositif de contrôle de puissance dans un réseau mobile, ledit dispositif étant associé à une station serveuse *s*, où *s* ∈ [1,.... *A*], appartenant à un groupe de A stations serveuses, où *A* ≥ 2, émettant chacune avec une puissance $P_s^{(b)}$, où *b* = 1,..., *B,* dans *B* sous-bandes de fréquences, avec *B* ≥ 1, ledit dispositif comprenant des moyens pour :

- recevoir, de la part de terminaux mobiles desservis par ladite station serveuse s, de mesures de paramètres radio effectuées par ces terminaux mobiles, ces mesures comprenant, pour chacun de ces terminaux mobiles :

  - le gain moyen entre la station serveuse s et ce terminal mobile,
  - le gain moyen entre une autre station serveuse t et ce terminal mobile,
  - la puissance reçue par ce terminal mobile de la part de la station serveuse s dans une sous-bande de fréquences *b*, et
  - la puissance totale des interférences et du bruit au niveau de ce terminal mobile,

- calculer à l'aide desdites mesures, qui ont été remontées par lesdits terminaux mobiles, ainsi que de la fonction de fading modélisant l'impact des fluctuations du gain sur le débit pour le système radio concerné, au moins une valeur $V_{s,t}^{(b)}$ prédéterminée, où *b* ∈ [1,..., *B*] et *t* ∈ [1,...,*A*], représentative de la quantité $\dfrac{\partial \overline{\rho}_s}{\partial P_t^{(b)}}$, où $\overline{\rho}_s$ est la charge de la station serveuse s définie sur une durée prédéterminée *T*, ladite charge $\overline{\rho}_s$ dépendant des intensités de trafic arrivant dans la zone géographique $D_s$ desservie par la station serveuse s et des débits délivrés par cette station serveuse,

- transmettre à au moins une autre station serveuse t, ou un dispositif associé à cette station serveuse *t,* la valeur respective $V_{s,t}^{(b)}$, et recevoir, de la part au moins de ladite station serveuse t ou dudit dispositif associé, la valeur analogue $V_{t,s}^{(b)}$,

- calculer, à l'aide au moins de ladite valeur $V_{t,s}^{(b)}$, les dérivées $\dfrac{\partial U}{\partial P_s^{(b)}}$, où $U$ est une fonction d'utilité prédéterminée pour ledit réseau, ladite fonction d'utilité $U = U(\overline{\rho_1},..., \overline{\rho_A})$ étant une fonction croissante des charges $\overline{\rho_t}$ des stations serveuses dudit groupe et dont les dérivées partielles $\dfrac{\partial U}{\partial \overline{\rho}t}$ sont connues de chacune de ces stations serveuses, et

- mettre à jour les puissances de transmission $P_s^{(b)}$ de manière à réduire la valeur de ladite fonction d'utilité $U$.

6. Dispositif de contrôle de puissance selon la revendication 5, **caractérisé en ce que** ladite charge est définie par l'expression :

$$\bar{\rho}_s = \int_{D_s} \frac{\lambda_{\vec{r}}}{\gamma_{\vec{r}}} d^2 \vec{r} \,,$$

où

- $\lambda_{\vec{r}}$ est l'intensité surfacique du trafic arrivant au point $r$, et
- $\tilde{\lambda} r$ est le débit maximum que la station serveuse s est capable de délivrer au point $r$.

7. Dispositif de contrôle de puissance selon la revendication 6, **caractérisé en ce qu'**il possède en outre des moyens pour obtenir ladite quantité $\dfrac{\partial \overline{\rho}_t}{\partial P_s^{(b)}}$ en faisant la moyenne, sur des itérations réalisées pendant ladite durée $T$, des quantités $\dfrac{\partial \rho_{t,m}}{\partial P_s^{(b)}}$, où l'indice $m$ compte les itérations, et la charge aléatoire $\rho_{t,m}$ est définie par :

$$\rho_{t,m} = \frac{1}{T_m} \sum_{j=1}^{N_{t,m}} \frac{\sigma_j}{\gamma_j} \,,$$

où

- l'index $j$, où $j = 1,..., N_{t,m}$, compte les communications initiées dans la zone géographique $D_t$ durant une période de durée $T_m < T$, ou bien une sélection prédéterminée de ces communications,
- $\gamma_j$ est le débit de la communication n° $j$, et
- $\sigma_j$ est la taille de fichier pour la communication n° $j$.

8. Circuit électronique, **caractérisé en ce qu'**il comprend un dispositif de contrôle de puissance selon l'une quelconque des revendications 5 à 7.

9. Circuit électronique selon la revendication 8, **caractérisé en ce qu'**il est constitué par une puce à logique câblée.

10. Station serveuse d'un réseau mobile, **caractérisée en ce qu'**elle comprend un dispositif de contrôle de puissance selon l'une quelconque des revendications 5 à 7.

11. Moyen de stockage de données inamovible, ou partiellement ou totalement amovible, comportant des instructions de code de programme informatique pour l'exécution des étapes d'un procédé de contrôle de puissance selon l'une quelconque des revendications 1 à 4.

12. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de contrôle de puissance selon l'une quelconque des revendications 1 à 4, lorsqu'il est exécuté sur un ordinateur.

**Patentansprüche**

1. Verfahren zur Steuerung der Leistung in einem Mobilfunknetz, wobei das Verfahren für jede bedienende Station $s$, wobei $s = 1,..,A$, die einer Gruppe von $A$ bedienenden Stationen angehört, wobei $A \geq 2$, die jeweils mit einer Leistung $P_s^{(b)}$, wobei $b = 1,...,B$, in $B$ Teilfrequenzbändern senden, mit $B \geq 1$, die folgenden Schritte umfasst:

   a) Empfang, von mobilen Endgeräten, die von der bedienenden Station $s$ bedient werden, von Messungen von Funkparametern, die durch diese mobilen Endgeräte vorgenommen werden, wobei diese Messungen für jedes dieser mobilen Endgeräte umfassen:

   • die mittlere Verstärkung zwischen der bedienenden Station $s$ und diesem mobilen Endgerät,
   • die mittlere Verstärkung zwischen einer anderen bedienenden Station $t$ und diesem mobilen Endgerät,
   • die durch dieses mobile Endgerät von der bedienenden Station $s$ in einem Teilfrequenzband $b$ empfangene Leistung, und
   • die Gesamtleistung der Interferenzen und des Rauschens an diesem mobilen Endgerät,

   b) Berechnung, mithilfe dieser Messungen, welche durch die mobilen Endgeräte übermittelt worden sind, sowie der Fading-Funktion, die den Einfluss der Schwankungen der Verstärkung auf den Durchsatz für das betreffende Funksystem modelliert, wenigstens eines vorbestimmten Wertes $V_{s,t}^{(b)}$, wobei $b \in [1,...,B]$ und $t \in [1,...,A]$, der für die Größe $\dfrac{\partial \overline{\rho_s}}{\partial P_t^{(b)}}$ repräsentativ ist, wobei $\overline{\rho_s}$ die auf einer vorbestimmten Dauer $T$ definierte Last der bedienenden Station $s$ ist, wobei die Last $\overline{\rho_s}$ von den Intensitäten des in dem von der bedienenden Station s bedienten geographischen Gebiet $D_s$ ankommenden Verkehrs und den von dieser bedienenden Station gelieferten Durchsätzen abhängt,

   c) Übertragung, an wenigstens eine andere bedienende Station $t$ oder eine dieser bedienenden Station $t$ zugeordnete Vorrichtung, des jeweiligen Wertes $V_{s,t}^{(b)}$, und Empfang, von der wenigstens einen bedienenden Station $t$ oder der zugeordneten Vorrichtung, des analogen Wertes $V_{t,s}^{(b)}$,

   d) Berechnung, mithilfe wenigstens des Wertes $V_{t,s}^{(b)}$, der Ableitungen $\dfrac{\partial U}{\partial P_s^{(b)}}$, wobei $U$ eine vorbestimmte Nutzenfunktion für das Netz ist, wobei die Nutzenfunktion $U = U(\overline{\rho_1},..., \overline{\rho_A})$ eine wachsende Funktion der Lasten $p_t$ der bedienenden Stationen der Gruppe ist, deren partielle Ableitungen $\dfrac{\partial U}{\partial \overline{\rho_t}}$ für jede dieser bedienenden Stationen bekannt sind, und

**14**

e) Aktualisierung der Übertragungsleistungen $P_s^{(b)}$, so dass der Wert der Nutzenfunktion $U$ verringert wird.

**2.** Verfahren zur Steuerung der Leistung nach Anspruch 1, **dadurch gekennzeichnet, dass** die Last durch den Ausdruck

$$\overline{\rho}_s = \int_{D_s} \frac{\lambda_{\overline{r}}}{\gamma_{\overline{r}}} d^2 \vec{r}$$

definiert ist, wobei

- $\lambda_{\overline{r}}$ die flächenbezogene Intensität des im Punkt $\overline{r}$ ankommenden Verkehrs ist, und
- $\gamma_{\overline{r}}$ der maximale Durchsatz ist, welchen die bediende Station $s$ an den Punkt $\overline{r}$ zu liefern in der Lage ist.

**3.** Verfahren zur Steuerung der Leistung nach Anspruch 2, **dadurch gekennzeichnet, dass** die Größe $\dfrac{\partial \overline{\rho}_t}{\partial P_s^{(b)}}$

erhalten wird, indem der Mittelwert, über während der Dauer $T$ durchgeführte Iterationen, der Größen $\dfrac{\partial \rho_{t,m}}{\partial P_s^{(b)}}$ gebildet wird, wobei der Index $m$ die Iterationen zählt und die zufällige Last $\rho_{t,m}$ durch

$$\rho_{t,m} = \frac{1}{T_m} \sum_{j=1}^{N_{t,m}} \frac{\sigma_j}{\gamma_j}$$

definiert ist, wobei

- der Index $j$, wobei $j = 1,..., N_{t,m}$, die Kommunikationen zählt, die in dem geographischen Gebiet $D_t$ während eines Zeitraums der Dauer $T_m < T$ initiiert werden, oder auch eine vorbestimmte Auswahl dieser Kommunikationen,
- $\gamma_j$ der Durchsatz der Kommunikation Nr. $j$ ist, und
- $\sigma_j$ die Größe der Datei für die Kommunikation Nr. $j$ ist.

**4.** Verfahren zur Steuerung der Leistung nach einem der Ansprüche 1 bis 3, **dadurch gekennzeichnet, dass** im Schritt c) jede bediende Station $s$ nur mit den benachbarten bediendenden Stationen $t$ kommuniziert, wobei eine bediendende Station $t$ als der bediendenden Station $s$ benachbart betrachtet wird, falls in dem geographischen Gebiet $D_s$ wenigstens ein solcher Punkt $\gamma_{\overline{r}}$ existiert, dass die Verstärkung $h_{t \to \overline{r}}$ zwischen der bediendenden Station $t$ und diesem Punkt $\gamma_{\overline{r}}$ größer als ein vorbestimmter Schwellenwert ist.

**5.** Vorrichtung zur Steuerung der Leistung in einem Mobilfunknetz, wobei die Vorrichtung einer bediendenden Station $s$ zugeordnet ist, wobei $s \in [1,..., A]$, die einer Gruppe von A bediendenden Stationen angehört, wobei $A \geq 2$, die jeweils mit einer Leistung $P_s^{(b)}$, wobei $b = 1,...,B$, in $B$ Teilfrequenzbändern senden, mit B $\geq 1$, wobei die Vorrichtung Mittel umfasst zum:

- Empfangen, von mobilen Endgeräten, die von der bediendenden Station $s$ bedient werden, von Messungen von Funkparametern, die durch diese mobilen Endgeräte vorgenommen werden, wobei diese Messungen für jedes dieser mobilen Endgeräte umfassen:

  - die mittlere Verstärkung zwischen der bediendenden Station $s$ und diesem mobilen Endgerät,
  - die mittlere Verstärkung zwischen einer anderen bediendenden Station $t$ und diesem mobilen Endgerät,
  - die durch dieses mobile Endgerät von der bediendenden Station $s$ in einem Teilfrequenzband $b$ empfangene Leistung, und

• die Gesamtleistung der Interferenzen und des Rauschens an diesem mobilen Endgerät,

- Berechnen, mithilfe dieser Messungen, welche durch die mobilen Endgeräte übermittelt worden sind, sowie der Fading-Funktion, die den Einfluss der Schwankungen der Verstärkung auf den Durchsatz für das betreffende Funksystem modelliert, wenigstens eines vorbestimmten Wertes $V_{s,t}^{(b)}$, wobei $b \in [1,...,B]$ und $t \in [1,...,A]$,

der für die Größe $\dfrac{\partial \overline{\rho}_s}{\partial P_t^{(b)}}$ repräsentativ ist, wobei $\overline{\rho}_s$ die auf einer vorbestimmten Dauer $T$ definierte Last der bedienenden Station $s$ ist, wobei die Last $\overline{\rho}_s$ von den Intensitäten des in dem von der bedienenden Station $s$ bedienten geographischen Gebiet $D_s$ ankommenden Verkehrs und den von dieser bedienenden Station gelieferten Durchsätzen abhängt,

- Übertragen, an wenigstens eine andere bedienende Station $t$ oder eine dieser bedienenden Station $t$ zugeordnete Vorrichtung, des jeweiligen Wertes $V_{s,t}^{(b)}$, und Empfangen, von der wenigstens einen bedienenden Station $t$ oder der zugeordneten Vorrichtung, des analogen Wertes $V_{t,s}^{(b)}$,

- Berechnen, mithilfe wenigstens des Wertes $V_{t,s}^{(b)}$, der Ableitungen $\dfrac{\partial U}{\partial P_s^{(b)}}$, wobei $U$ eine vorbestimmte Nutzenfunktion für das Netz ist, wobei die Nutzenfunktion $U = U(\overline{\rho_1},..., \overline{\rho_A})$ eine wachsende Funktion der Lasten $\overline{\rho}_t$ der bedienenden Stationen der Gruppe ist, deren partielle Ableitungen $\dfrac{\partial U}{\partial \overline{\rho}_t}$ für jede dieser bedienenden Stationen bekannt sind, und

- Aktualisieren der Übertragungsleistungen $P_s^{(b)}$, so dass der Wert der Nutzenfunktion $U$ verringert wird.

6. Vorrichtung zur Steuerung der Leistung nach Anspruch 5, **dadurch gekennzeichnet, dass** die Last durch den Ausdruck

$$\overline{\rho}_s = \int_{D_s} \frac{\lambda_{\vec{r}}}{\gamma_{\vec{r}}} d^2\vec{r}$$

definiert ist, wobei

• $\lambda_{\vec{r}}$ die flächenbezogene Intensität des im Punkt $r$ ankommenden Verkehrs ist, und
• $\gamma_{\vec{r}}$ der maximale Durchsatz ist, welchen die bedienende Station $s$ an den Punkt $r$ zu liefern in der Lage ist.

7. Vorrichtung zur Steuerung der Leistung nach Anspruch 6, **dadurch gekennzeichnet, dass** sie außerdem Mittel zum Gewinnen der Größe $\dfrac{\partial \overline{\rho}_t}{\partial P_s^{(b)}}$ besitzt, indem der Mittelwert, über während der Dauer $T$ durchgeführte Iterationen, der Größen $\dfrac{\partial \rho_{t,m}}{\partial P_s^{(b)}}$ gebildet wird, wobei der Index $m$ die Iterationen zählt und die zufällige Last $\overline{\rho}_{t,m}$ durch

$$\rho_{t,m} = \frac{1}{T_m} \sum_{j=1}^{N_{t,m}} \frac{\sigma_j}{\gamma_j}$$

definiert ist, wobei

> • der Index *j*, wobei *j* = 1,..., $N_{t,m}$, die Kommunikationen zählt, die in dem geographischen Gebiet $D_t$ während eines Zeitraums der Dauer $T_m < T$ initiiert werden, oder auch eine vorbestimmte Auswahl dieser Kommunikationen,
> • $\gamma_j$ der Durchsatz der Kommunikation Nr. *j* ist, und
> • $\sigma_j$ die Größe der Datei für die Kommunikation Nr. *j* ist.

8. Elektronische Schaltung, **dadurch gekennzeichnet, dass** sie eine Vorrichtung zur Steuerung der Leistung nach einem der Ansprüche 5 bis 7 umfasst.

9. Elektronische Schaltung nach Anspruch 8, **dadurch gekennzeichnet, dass** sie aus einem festverdrahteten Logik-Chip besteht.

10. Bedienende Station eines Mobilfunknetzes, **dadurch gekennzeichnet, dass** sie eine Vorrichtung zur Steuerung der Leistung nach einem der Ansprüche 5 bis 7 umfasst.

11. Nicht wechselbares oder teilweise oder vollständig wechselbares Datenspeichermittel, welches Programmcodeanweisungen zur Ausführung der Schritte eines Verfahrens zur Steuerung der Leistung nach einem der Ansprüche 1 bis 4 aufweist.

12. Aus einem Kommunikationsnetz herunterladbares und/oder auf einem computerlesbaren Medium gespeichertes und/oder von einem Mikroprozessor ausführbares Computerprogramm, **dadurch gekennzeichnet, dass** es Anweisungen zur Ausführung der Schritte eines Verfahrens zur Steuerung der Leistung nach einem der Ansprüche 1 bis 4, wenn es auf einem Computer ausgeführt wird, umfasst.


**Claims**

1. Method for controlling power in a mobile network, said method comprising, for each server station *s*, where *s* = 1,...,

   *A*, belonging to a group of *A* server stations, where $A \geq 2$, each emitting with a power $P_s^{(b)}$, where *b* = 1,...,*B*, within *B* sub-bands of frequencies, with $B \geq 1$, the following steps:

   > a) reception, from mobile terminals served by said server station *s*, of measurements of radio parameters performed by these mobile terminals, these measurements comprising, for each of these mobile terminals:
   >
   > > • the average gain between the server station *s* and this mobile terminal,
   > > • the average gain between another server station t and this mobile terminal,
   > > • the power received by this mobile terminal from the server station *s* in a sub-band of frequencies *b*, and
   > > • the total power of the interference and noise at this mobile terminal,
   >
   > b) calculation of at least one predetermined value $V_{s,t}^{(b)}$, where $b \in [1,...,B]$ and $t \in [1,..., A]$, representative of the quantity $\frac{\partial \bar{\rho}_s}{\partial P_t^{(b)}}$, where $\overline{\rho_s}$ is the load of the server station s defined over a predetermined period *T*, said load $\overline{\rho_s}$ depending on the intensities of traffic arriving in the geographical area $D_s$ served by the server station *s* and on the data rates delivered by this server station, by means of said measurements that have been fed back by said mobile terminals, and of the fading function modelling the impact of the gain fluctuations on the data rate for the radio system in question,
   > c) transmission, to at least one other server station *t,* or a device associated with this server station *t,* of the respective value $V_{s,t}^{(b)}$, and reception, from at least said server station *t* or from said associated device, of the analogous value $V_{t,s}^{(b)}$,

d) calculation, by means of at least said value $V_{t,s}^{(b)}$, of the derivatives $\frac{\partial U}{\partial P_s^{(b)}}$, where $U$ is a predetermined utility function for said network, said utility function $U = U(\bar{\rho}_1,...,\bar{\rho}_A)$ being an increasing function of the loads $P_t$ of the server stations of said group and the partial derivatives $\frac{\partial U}{\partial \bar{\rho}_t}$ of which are known to each of these server stations, and

e) updating of the transmission powers $P_s^{(b)}$ so as to reduce the value of said utility function $U$.

2. Power control method according to Claim 1, **characterized in that** said load is defined by the expression:

$$\bar{\rho}_s = \int_{D_s} \frac{\lambda_{\vec{r}}}{\gamma_{\vec{r}}} d^2\vec{r} \ ,$$

where

- $\lambda_{\vec{r}}$ is the areal intensity of the traffic arriving at the point $\bar{r}$, and
- $\gamma_{\vec{r}}$ is the maximum data rate that the server station $s$ is capable of delivering at the point $\bar{r}$.

3. Power control method according to Claim 2, **characterized in that** said quantity $\frac{\partial \bar{\rho}_t}{\partial P_s^{(b)}}$ is obtained by taking the average, over iterations performed during said period $T$, of the quantities $\frac{\partial \rho_{t,m}}{\partial P_s^{(b)}}$, where the index $m$ counts the iterations, and the random load $\rho_{t,m}$ is defined by:

$$\rho_{t,m} = \frac{1}{T_m} \sum_{j=1}^{N_{t,m}} \frac{\sigma_j}{\gamma_j} \ ,$$

where

- the index $j$, where $j = 1,...,N_{t,m}$ counts the communications initiated within the geographical area $D_t$ during a period of duration $T_m < T$, or else a predetermined selection of these communications,
- $\gamma_j$ is the data rate for the communication no. $j$, and
- $\sigma_j$ is the file size for the communication no. $j$.

4. Power control method according to any one of Claims 1 to 3, **characterized in that**, during said step c), each server station s only communicates with the neighbouring server stations $t$, a server station $t$ being considered as neighbouring the server station s if there exists, within the geographical area $D_s$, at least one point $\gamma_{\vec{r}}$ such that the gain $h_{t\to\vec{r}}$ between the server station $t$ and this point $\gamma_{\vec{r}}$ is greater than a predetermined threshold.

5. Device for controlling power in a mobile network, said device being associated with a server station $s$, where $s \in [1,...,A]$, belonging to a group of $A$ server stations, where $A \geq 2$, each emitting with a power $P_s^{(b)}$, where $b = 1,...,B$, within $B$ sub-bands of frequencies, with $B \geq 1$, said device comprising means for:

- receiving, from mobile terminals served by said server station $s$, measurements of radio parameters performed by these mobile terminals, these measurements comprising, for each of these mobile terminals:

- the average gain between the server station $s$ and this mobile terminal,
- the average gain between another server station t and this mobile terminal,
- the power received by this mobile terminal from the server station s in a sub-band of frequencies $b$, and

• the total power of the interference and noise at this mobile terminal,

- calculating at least one predetermined value $V_{s,t}^{(b)}$, where $b \in [1,...,B]$ and $t \in [1,...,A]$, representative of

the quantity $\dfrac{\partial \bar{\rho}_s}{\partial P_t^{(b)}}$, where $\overline{\rho_s}$ is the load of the server station $s$ defined over a predetermined period $T$, said load $\overline{\rho_s}$ depending on the intensities of traffic arriving in the geographical area $D_s$ served by the server station $s$ and on the data rates delivered by this server station, by means of said measurements that have been fed back by said mobile terminals, and of the fading function modelling the impact of the gain fluctuations on the data rate for the radio system in question,

- transmitting, to at least one other server station $t$, or a device associated with this server station $t$, the respective value $V_{s,t}^{(b)}$, and receiving, from at least said server station $t$ or from said associated device, the analogous value $V_{t,s}^{(b)}$,

- calculating, by means of at least said value $V_{t,s}^{(b)}$, the derivatives $\dfrac{\partial U}{\partial P_s^{(b)}}$, where $U$ is a predetermined utility function for said network, said utility function $U = U(\overline{\rho_1},...,\overline{\rho_A})$ being an increasing function of the loads $\overline{\rho_t}$ of the

server stations of said group and the partial derivatives $\dfrac{\partial U}{\partial \bar{\rho}_t}$ of which are known to each of these server stations, and

- updating the transmission powers $P_s^{(b)}$ so as to reduce the value of said utility function $U$.

6. Power control device according to Claim 5, **characterized in that** said load is defined by the expression:

$$\bar{\rho}_s = \int_{D_s} \frac{\lambda_{\vec{r}}}{\gamma_{\vec{r}}} d^2 \vec{r} \quad ,$$

where

• $\lambda_{\vec{r}}$ is the areal intensity of the traffic arriving at the point $r$, and
• $\gamma_{\vec{r}}$ is the maximum data rate that the server station $s$ is capable of delivering at the point $r$.

7. Power control device according to Claim 6, **characterized in that** it furthermore possesses means for obtaining

said quantity $\dfrac{\partial \bar{\rho}_t}{\partial P_s^{(b)}}$ by taking the average, over iterations performed during said period $T$, of the quantities $\dfrac{\partial \rho_{t,m}}{\partial P_s^{(b)}}$, where the index $m$ counts the iterations, and the random load $\rho_{t,m}$ is defined by:

$$\rho_{t,m} = \frac{1}{T_m} \sum_{j=1}^{N_{t,m}} \frac{\sigma_j}{\gamma_j} \quad ,$$

where

• the index $j$, where $j = 1,...,N_{t,m}$, counts the communications initiated within the geographical area $D_t$ during a period of duration $T_m < T$, or else a predetermined selection of these communications,
• $\gamma_j$ is the data rate for the communication no. $j$, and
• $\sigma_j$ is the file size for the communication no. $j$.

8. Electronic circuit, **characterized in that** it comprises a power control device according to any one of Claims 5 to 7.

9. Electronic circuit according to Claim 8, **characterized in that** it is formed by a wired logic chip.

10. Server station for a mobile network, **characterized in that** it comprises a power control device according to any one of Claims 5 to 7.

11. Non-removable or partially or totally removable data storage means comprising computer program code instructions for the execution of the steps of a power control method according to any one of Claims 1 to 4.

12. Computer program, downloadable from a communications network and/or stored on a computer-readable medium and/or executable by a microprocessor, **characterized in that** it comprises instructions for the execution of the steps of a power control method according to any one of Claims 1 to 4 when it is executed on a computer.

**FIG. 1**

**FIG. 2**

**FIG. 3**

**FIG. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R. COMBES ; Z. ALTMAN ; E. ALTMAN.** Self-organizing fractional power control for interference coordination in OFDMA networks. *IEEE ICC,* 2011

- Evolved Universal Terrestrial Radio Access (E-UTRA); Physical layer. *3GPP TS 36.214*